**Europäisches Patentamt**

**European Patent Office**

**Office européen des brevets**

(19)

(11) Veröffentlichungsnummer: **0 106 262**
**B1**

(12)

# EUROPÄISCHE PATENTSCHRIFT

(45) Veröffentlichungstag der Patentschrift:
**20.04.88**

(21) Anmeldenummer: **83109895.9**

(22) Anmeldetag: **04.10.83**

(51) Int. Cl.⁴: **B 23 K  1/12,** B 23 K  11/16,
B 23 K  31/00, F 28 F  1/10,
F 28 F  3/02

(54) **Wärmetauscher, insbesondere Heizkörper.**

(30) Priorität: **07.10.82 DE 3237143**
**01.02.83 DE 3303237**

(43) Veröffentlichungstag der Anmeldung:
**25.04.84 Patentblatt 84/17**

(45) Bekanntmachung des Hinweises auf die Patenterteilung:
**20.04.88 Patentblatt 88/16**

(84) Benannte Vertragsstaaten:
**AT BE CH DE FR GB IT LI NL SE**

(56) Entgegenhaltungen:
**DE - A - 1 807 382**
**DE - A - 1 814 801**
**DE - A - 2 315 035**
**DE - A - 2 723 072**
**DE - U - 1 938 253**
**US - A - 1 613 253**

**SCHWEISSTECHNIK, Band 22, Heft 8, 1972, DDR-Berlin
J. SZYMANSKI "Punktschweissen aluminierter Bleche
im Stahlbau", Seiten 361-363**

(73) Patentinhaber: **Schäfer Werke GmbH,
Pfannenbergstrasse 2, D-5908 Neunkirchen (DE)**

(72) Erfinder: **Meike, Klaus, Eiserfelder Hütte 22,
D-5900 Siegen-Eiserfeld (DE)**

(74) Vertreter: **Missling, Arne, Dipl.-Ing. et al, Patentanwälte
Dipl.-Ing. R. Schlee Dipl.-Ing. A. Missling
Bismarckstrasse 43, D-6300 Giessen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Wärmetauscher, insbesondere einen Heizkörper oder einen Wärmeabsorber, mit einem plattenförmigen Hohlkörper aus Stahlblech, der Hohlräume für die Führung eines strömungsfähigen, vorzugsweise flüssigen Wärmeträgermediums aufweist und mit mindestens einem wärmeleitend mit der Stahlwand verbundenen und von dieser abragenden Wärmeleitblech, das aus einem Metall besteht, dessen Wärmeleitfähigkeit grösser ist als die Wärmeleitfähigkeit von Stahl, wobei das Wärmeleitblech mit dem Hohlkörper mittels eines mit dem Hohlkörper verschweissten Materials gegen den Hohlkörper angepresst ist.

Solche Wärmetauscher haben den Vorteil, dass die wärmeabgebende Fläche, z.B. bei einem Heizkörper, bzw. die wärmeaufnehmende Fläche, z.B. bei einem Absorber einer Wärmepumpe, im Vergleich mit einem Wärmetauscher, der nur aus einem Hohlkörper besteht, sehr wesentlich erhöht wird. Die Wirkung des Wärmeleitbleches ist umso grösser, je stärker der Wärmefluss im Blech ist. Dieser Wärmefluss hängt einmal von der spezifischen Wärmeleitfähigkeit und zum anderen vom Blechquerschnitt ab.

Bei einem bekannten Wärmetauscher der eingangs genannten Art (DE-U-1 938 253) ist das Wärmeleitblech mit Hilfe von an den plattenförmigen Hohlkörper angeschweissten Lappen befestigt. Diese Lappen durchgreifen Schlitze im Wärmeleitblech und sind entweder umgebogen oder von Befestigungskeilen durchgriffen. Mit solchen Verbindungen lässt sich keine so feste Anlage des Wärmeleitbleches am Hohlkörper erzielen, dass eine zufriedenstellende Wärmeübertragung zwischen Hohlkörper und Wärmeleitblech stattfindet. Der bekannte Wärmetauscher erfordert auch erhebliche Herstellungskosten, da viele einzelne Lappen an den Hohlkörper angeschweisst werden müssen.

Bei einem weiteren bekannten Wärmetauscher (DE-A1-2 315 035) sind zwischen parallelen Rohren aus Eisen oder Kupfer Lamellen aus Aluminium angeordnet, die aus mäanderförmig gebogenen Blechstreifen gebildet sind. Die Blechstreifen sind mit den parallelen Rohren durch Löten verbunden. Ein so ausgebildeter Wärmetauscher hat aufgrund der sehr guten Wärmeleitfähigkeit von Aluminium, bezogen auf seine Grösse, eine hohe Leistung. Die Herstellung ist jedoch teuer und umständlich wegen des anzuwendenden Lötverfahrens.

Bekannt ist auch ein Verfahren zum Verbinden von Schichten durch Verschweissen (DE-A1-2 723 072), mit dem Materialien miteinander verbunden werden können, die nicht unmittelbar miteinander verschweissbar sind. Zu diesem Zweck wird eine der Schichten gelocht, in dieses Loch eine Kugel aus einem Material eingelegt, die mit der anderen Schicht verschweissbar ist und danach diese Kugel mit der zuletzt genannten Schicht verschweisst, wodurch die gelochte Schicht an die andere Schicht angepresst wird. In der genannten Druckschrift wird kein Bezug genommen auf die Herstellung von Wärmetauschern.

Schliesslich ist es bekannt (SCHWEISSTECHNIK, Band 22, Heft 8, 1972, DDR-Berlin J. SZYMANSKI «Punktschweissen aluminierter Bleche im Stahlbau», Seiten 361–362) mit einer Aluminiumschicht versehene Bleche miteinander zu verschweissen, wobei das elektrische Widerstandsschweissen angewendet wird und zunächst die Aluminiumschichten durchgeschmolzen werden, so dass die Stahlkerne der Bleche unmittelbar miteinander in Berührung kommen. Die nur sehr dünnen Aluminiumschichten sind keine selbständigen Bauteile, sondern durch Eindiffundieren des Aluminiums in den Stahl fest mit den Stahlblechen verbunden. Ein Hinweis auf die Herstellung von Wärmetauschern ist auch in dieser Druckschrift nicht enthalten.

Der Erfindung liegt die Aufgabe zugrunde, einen Wärmetauscher der eingangs genannten Art so auszubilden, dass mit geringen Herstellungskosten eine gut wärmeleitende Verbindung zwischen dem Wärmeleitblech und dem Hohlkörper entsteht.

Es werden zwei Lösungen dieser Aufgabe vorgeschlagen. Die Lösung nach dem Patentanspruch 1 ist dadurch gekennzeichnet, dass das mit dem Hohlkörper verschweisste Material aus einem Stahlblechstreifen besteht, der auf dem Wärmeleitblech aufliegt und dieses an mehreren Stellen durchgreift und mit dem Hohlkörper durch Punktschweissungen verschweisst ist.

Die Lösung nach dem Patentanspruch 2 ist dadurch gekennzeichnet, dass das mit dem Hohlkörper verschweisste Material aus Stahlpartikeln, wie Stanzbutzen oder Spänen, besteht, wobei mehrere Stahlpartikel durch eine Punktschweissung mit dem Stahl-Hohlkörper verschweisst, die in das Wärmeleitblech eingebettet sind, wobei die Schmelztemperatur des Wärmeleitbleches geringer ist als die Schmelztemperatur der Stahlpartikel.

Bei beiden Lösungen wird das besonders rationelle Punktschweissverfahren angewendet und ein sehr fester Andruck des Wärmeleitbleches an den plattenförmigen Hohlkörper erzielt, wodurch ein sehr guter Wärmeübergang erreicht wird.

Bei der Lösung nach dem Patentanspruch 1 ist es sowohl möglich, ein vorgelochtes Wärmeleitblech zu verwenden (Anspruch 3), als auch die Löcher für den Durchgriff des Stahlbleches durch Schmelzen mittels der vom Schweissstrom erzeugten Hitze herzustellen (Anspruch 4). Vorgestanzte Löcher gemäss Anspruch 3 haben den Vorteil, dass ein Anschmelzen des Wärmeleitbleches nicht erforderlich ist und eine besonders haltbare Verbindung zwischen dem Blechstreifen und der Stahlwand hergestellt werden kann. Insbesondere dann, wenn der Blechstreifen durch eine Schweisselektrode eingebeult wird, erreicht man auch bei grossen Herstellungstoleranzen für den Lochdurchmesser und die Lochabstände eine feste und damit gut wärmeleitende Anlage des Wärmeleitbleches an der Stahlwand. Bei der Ausführungsform nach Anspruch 4 muss zwar das Wärmeleitblech durchgeschmolzen werden, jedoch wird der Vorteil gewonnen, dass das aufgelegte Stahlblech einen besonders intensiven Kontakt mit dem Wärmeleitblech hat, wodurch auch ein besonders guter Wärmeübergang von der Stahlwand in das Wärmeleitblech erreicht wird. Wenn das Wärmeleitblech beim Anschweissen durchgeschmolzen werden soll, muss sein Schmelzpunkt niedriger liegen (mindestens um 50 °C) als der Schmelzpunkt von Stahl. Diese Voraussetzung ist insbesondere für Aluminium und Aluminiumlegierungen gegeben. Das Durchschmelzen des Wärmeleitbleches ist ohne einen zusätzlichen Arbeitsgang erreichbar, wenn hierfür Schweisselektroden benutzt werden, die nach dem Durchschmelzen auch die Verschweissung zwischen dem Blechstreifen und der Stahlwand bewirken. Bei einer Vorlochung kann der Schmelzpunkt des Wärmeleitbleches auch höher sein, z.B. auch höher als der Schmelzpunkt von Stahl.

Das Wärmeleitblech besteht vorzugsweise aus Aluminium oder einer Aluminiumlegierung (Anspruch 5).

Die spezifische Wärmeleitfähigkeit von gewöhnlichem Stahl ist etwa 40 W/mk und von rostfreiem Edelstahl nur etwa 15 W/mK, während die spezifische Leitfähigkeit von Aluminium etwa 200 W/mK beträgt, also das fünffache der spezifischen Wärmeleitfähigkeit von gewöhnlichem Stahl. Dies bedeutet, dass bei einer gegebenen Blechdicke in einem Aluminiumblech fünfmal so viel Wärme transportiert wird als in einem Stahlblech. Dadurch wird die Wirksamkeit des Wärmeleitbleches sehr wesentlich erhöht und damit auch die Leistung des Wärmetauschers insgesamt. Die Kombination einer Wand aus Stahl und eines Wärmeleitbleches aus Aluminium ist auch im Hinblick auf die Korrosion unproblematisch. Zwar liegen Aluminium und Stahl in der Spannungsreihe der Metalle auseinander, jedoch ist dies unschädlich, da ein Elektrolyt zwischen Hohlkörper und Wärmeleitblech in der Regel nicht vorhanden ist. Sollte bei ungünstigen Einbaubedingungen gelegentlich ein Elektrolyt in Form von Schwitzwasser auftreten, so ist dies keinesfalls für die Dichtheit des Hohlkörpers eine Gefahr, da das weniger edle Material, nämlich Aluminium, geopfert wird und so allenfalls das Wärmeleitblech angegriffen wird, nicht jedoch der Hohlkörper. Die erfindungsgemässe Kombination ist auch gegenüber bekannten Heizkörpern aus Aluminium vorteilhaft, da das Heizwasser nur mit Stahl in Berührung kommt und deshalb Stahlrohre und auch Kupferrohre ohne Nachteil direkt an den Heizkörper oder sonstigen Wärmetauscher angeschlossen werden können. Die Zwischenfügung von Kunststoffabschnitten in der anzuschliessenden Leitung, wie sie mit Rücksicht auf die Korrosion bei Verwendung von Aluminium-Wärmetauschern erforderlich ist, ist also bei Verwendung erfindungsgemässer Wärmetauscher nicht nötig. Die Erfindung ermöglicht es, das Wärmeleitblech wesentlich länger auszubilden, als dies bei der Verwendung von Stahlblech sinnvoll ist, da z.B. bei einem Heizkörper, auch an weit von der Kontaktstelle mit dem Stahlblech entfernte Bereiche des Wärmeleitbleches noch grosse Wärmemengen transportiert werden, so dass dort noch Temperaturdifferenzen zur Umgebung vorhanden sind, die einen erheblichen Wärmeaustausch ermöglichen. Die Erfindung ist nicht auf die Verwendung von Aluminium als gut wärmeleitendes Material beschränkt. In Betracht kommen auch andere Metalle mit guter Wärmeleitfähigkeit, insbesondere zahlreiche Aluminiumlegierungen.

Bei Verwendung von Aluminiumblechen sind für das Wärmeleitblech Wanddicken zwischen 0,3 mm bis 0,5 mm besonders vorteilhaft. Solche Wanddicken geben dem Wärmeleitblech eine verhältnismässig grosse Stabilität und haben eine Wärmeleitfähigkeit, die einem Stahlblech mit einer Dicke zwischen 1,5 und 2,5 mm entspricht. Wegen der hohen spezifischen Leitfähigkeit können jedoch auch Wärmeleitbleche verwendet werden, die dünner sind als 0,3 mm. In diesem Fall ist eine geschützte Anordnung des Wärmeleitbleches zweckmässig, um Deformationen zu vermeiden.

Bei Verwendung von Stahlblechstreifen wird die Herstellung erleichtert, wenn gemäss Anspruch 6 ein formschlüssiger Eingriff zwischen Wärmeleitblech und Blechstreifen vorgesehen wird. Insbesondere empfiehlt sich dies bei Verwendung von vorgelochten Blechstreifen.

Für ein festes Andrücken des Wärmeleitbleches an die Stahlwand ist es ausreichend, wenn der Stahlblechstreifen etwa die gleiche Dicke hat wie das Wärmeleitblech. Diese Dickenwahl wird deshalb besonders empfohlen (Anspruch 7).

Der erfindungsgemässe Wärmetauscher ist sowohl mit mehreren einzelnen Wärmeleitblechen als auch mit einem oder mehreren grossen zusammenhängenden Wärmeleitblechen realisierbar. Wegen der guten Wärmeleitfähigkeit kann es bei beiden Ausführungsformen zweckmässig sein, die Wärmeleitbleche so zu profilieren, dass die wärmeaufnehmenden bzw. wärmeabgebenden Flächen möglichst gross werden. Besonders vorteilhaft im Zusammenhang mit der Verwendung von Stahlblechstreifen sind mäanderförmig gebogene Wärmeleitbleche gemäss Anspruch 8, da die Form der Wärmeleitbleche ohne zusätzlichen Aufwand eine seitliche Fixierung der Stahlblechstreifen bei der Herstellung ergibt.

In der Zeichnung sind Ausführungsbeispiele der Erfindung dargestellt. Es zeigen:

Fig. 1 in perspektivischer Darstellung die Wand eines Hohlkörpers mit mehreren daran befestigten winkelförmigen Wärmeleitblechen,

Fig. 2 eine Draufsicht auf ein winkelförmiges Wärmeleitblech, wie es bei dem Wärmetauscher nach Fig. 1 verwendet ist,

Fig. 3 bis 6 entsprechende Draufsichten bei anderen Formen von Wärmeleitblechen,

Fig. 7 einen Teilschnitt im Bereich der Befestigung eines Wärmeleitbleches an einem Hohlkörper, wobei ein aufgelegtes Stahlblech durch eine Lochung im Wärmeleitblech hindurchgedrückt ist,

Fig. 8 einen der Fig. 7 entsprechenden Schnitt bei einer Befestigung, bei deren Herstellung das Wärmeleitblech durchgeschmolzen wurde,

Fig. 9 einen den Fig. 7 und 8 entsprechenden Teilschnitt, wobei jedoch die Befestigung des Wärmeleitbleches mittels eingelagerter Stahlpartikel hergestellt ist,

Fig. 10 eine perspektivische Ansicht eines Wärmetauschers, bei dem ein grosses zusammenhängendes, mäanderförmig gebogenes Metallblech verwendet ist,

Fig. 11 einen Schnitt durch einen Wärmetauscher gemäss Fig. 10 im Zustand vor der Befestigung des Wärmeleitbleches am Hohlkörper,

Fig. 12 einen der Fig. 11 entsprechenden Schnitt im Zustand nach vollendeter Befestigung des Wärmeleitbleches,

Fig. 13 einen vertikalen Teilschnitt durch den Wärmetauscher nach Fig. 10 im Zustand vor der Befestigung (entsprechend Fig. 11),

Fig. 14 einen vertikalen Teilschnitt im Zustand nach der Befestigung (entsprechend Fig. 12),

Fig. 15 einen Horizontalschnitt durch einen Wärmetauscher, wobei verschieden hohe Wärmeleitbleche dargestellt sind,

Fig. 16 eine Draufsicht auf einen Wärmetauscher mit zwei Hohlkörpern und an diesen befestigten grossen Wärmeleitblechen mit profilierten Schleifen und

Fig. 17 einen Horizontalschnitt durch einen Wärmetauscher, bei dem das Wärmeleitblech auf einem Halteblech befestigt ist.

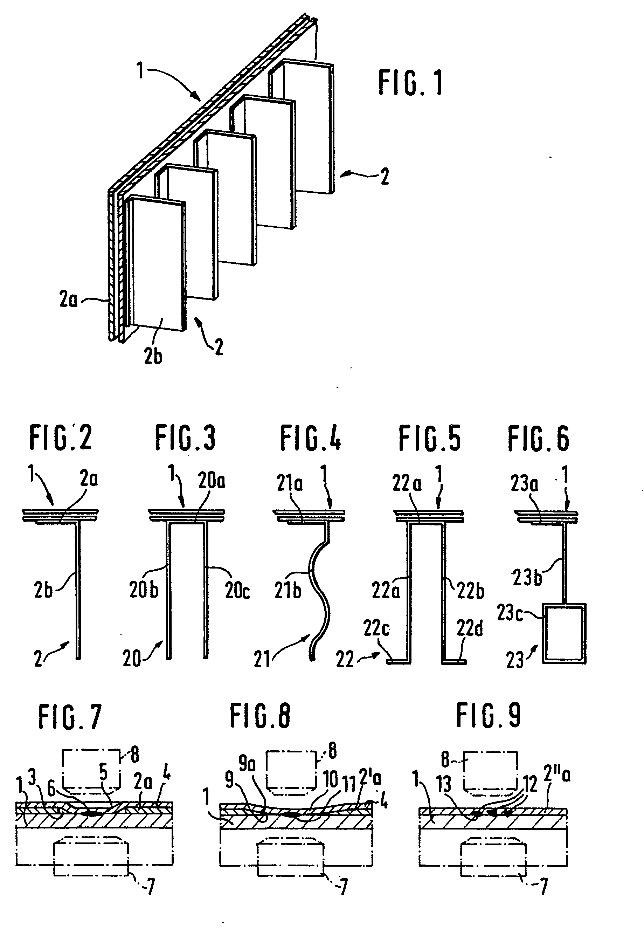

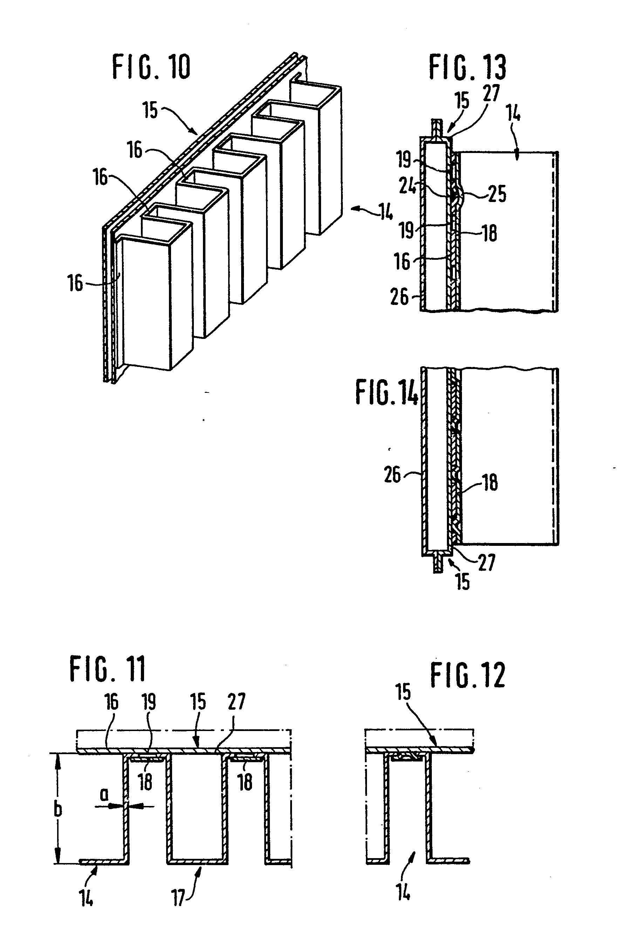

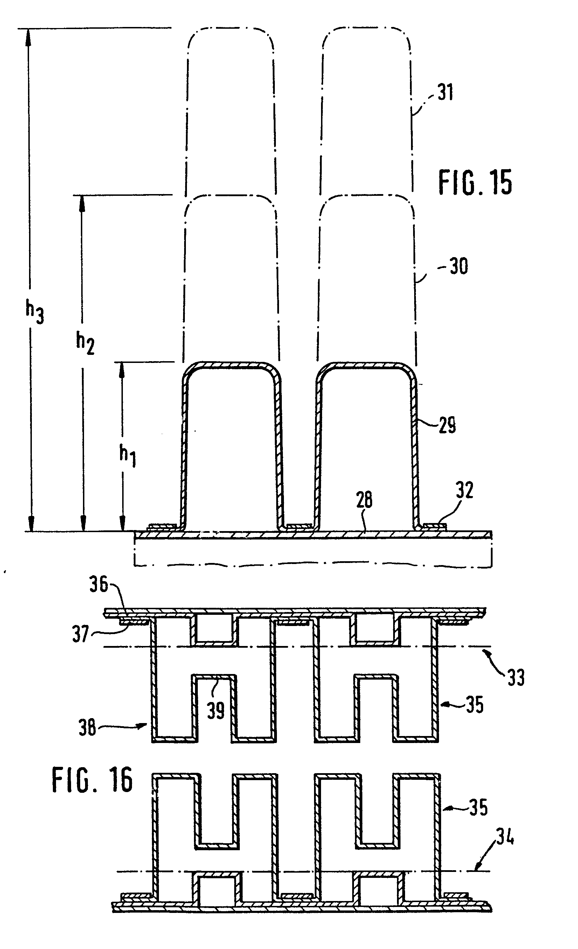

Der Wärmetauscher nach Fig. 1 hat einen Hohlkörper 1 und wärmeleitend mit diesem verbundene Wärmeleitbleche 2. Die Wärmeleitbleche 2 sind winkelförmig, wie auch Fig. 2 zeigt. Der Hohlkörper 1 besteht aus Stahl und kann z.B. aus zwei Schalen zusammengesetzt sein, die an ihren Rändern miteinander verschweisst sind, wie dies die Fig. 13 und 14 zeigen, während die Wärmeleitbleche 2 aus einem anderen Material bestehen, dessen Wärmeleitfähigkeit grösser ist als die Wärmeleitfähigkeit von Stahl. Besonders gut geeignet sind Aluminium und Aluminiumlegierungen. Im folgenden wird angenommen, dass bei den dargestellten Ausführungsbeispielen Wärmeleitbleche aus Aluminium verwendet sind. Aluminium und Stahl können bekanntlich nicht miteinander verschweisst werden. Um eine gut wärmeleitende Verbindung herzustellen, wurden deshalb die nachfolgend beschriebenen Konstruktionen angewendet.

Jedes Wärmeleitblech hat einen zum Hohlkörper 1 parallelen Schenkel 2a und einen vom Hohlkörper 1 abragenden Schenkel 2b. Bei der Ausführungsform nach Fig. 7 ist der Schenkel 2a mit Löchern 3 versehen. Auf dem Schenkel 2a liegt ein Blechstreifen 4 auf. Der Blechstreifen ist im Bereich jedes Loches 3 mit einer Einbeulung 5 versehen, die ein zugeordnetes Loch 3 durchgreift und mit dem Hohlkörper 1 durch Punktschweissung verbunden ist. Die Verschweissungszone ist mit 6 bezeichnet.

Durch den Blechstreifen 4 wird der Schenkel 2a fest gegen den Hohlkörper 1 angepresst und so eine gut wärmeleitende Verbindung hergestellt. Die Verschweissung erfolgt mittels Elektroden 7 und 8, die während der Verschweissung mit dem Hohlkörper Kontakt haben.

Die Elektroden 7, 8 sind in zurückgezogenem Zustand gezeigt. Während des Schweissvorganges ist die Elektrode 8 an das Blech 4 und die Elektrode 7 an den Hohlkörper 1 angepresst. Die Elektrode 8 erzeugt auch die Einbeulung. Vor dem Andruck der Elektrode ist der Blechstreifen 4 auch im Bereich der Löcher 3 eben.

Bei der Ausführungsform nach Fig. 8 wird ebenfalls ein Blechstreifen 4 für die Befestigung des hier mit 2'a bezeichneten Schenkels des Wärmeleitbleches verwendet, jedoch sind im Schenkel 2'a vorgestanzte Löcher nicht vorhanden. Der Blechstreifen 4 wird dadurch mit der Stahlwand des Hohlkörpers 1 in Verbindung gebracht, dass der Schenkel 2'a an der Verschweissungsstelle durchgeschmolzen wird. Bei dieser Durchschmelzung entsteht ebenfalls ein Loch 9, dessen Wandung jedoch nicht zylindrisch ist, sondern die Form eines flachen Hohlkegels hat. Der Blechstreifen 4 wird auch hier eingebeult (Einbeulung 10), jedoch ist die Beule flacher. Da die Bildung des Loches 9 durch Schmelzen erfolgt, erhält man eine Anpassung der Lochwandung 9a an die Form der Einbeulung 9, wodurch ein besonders intensiver Kontakt hergestellt ist. Die eigentliche Verschweissungsstelle ist mit 11 bezeichnet. Zur Herstellung der Verschweissung dienen auch hier Punktschweisselektroden 7 und 8, die in einer etwas zurückgezogenen Lage dargestellt sind.

Bei der Ausführungsform nach Fig. 9 sind in den Schenkel 2''a Stahlpartikel eingelagert. Diese Stahlpartikel sind mit der Stahlwand 1, z.B. der Wand eines Hohlkörpers, verschweisst. Bei der Herstellung der Verbindung werden Stahlpartikel, die aus Abfallmaterial bestehen können, auf den Schenkel 2''a aufgestreut. Durch Anpressen der Elektroden 7, 8 wird zunächst durch Erwärmung mittels des Schweissstromes das Material des Wärmeleitbleches erweicht und die Partikel 12 werden in das erweichte Material eingedrückt. Diese Partikel aus Stahl haben ja einen wesentlich höheren Schmelzpunkt als das Wärmeleitblech aus Aluminium. Schliesslich kommen mindestens einige der Partikel 12 mit der Stahlwand 1 in Berührung, so dass eine Verschweissung hergestellt wird. Die Verschweissungsstellen sind hier mit 13 bezeichnet. Die Ausführungsform nach Fig. 9 hat den Vorteil, dass besondere Blechstreifen nicht erforderlich sind, wie sie bei den Ausführungsformen nach den Fig. 7 und 8 gebraucht werden.

In den Fig. 3 bis 6 sind weitere Formen für Wärmeleitbleche dargestellt. Fig. 3 zeigt ein U-förmiges Wärmeleitblech 20, das einen Steg 20a und Schenkel 20b, 20c aufweist. Der Steg 20a kann in gleicher Weise mit einem Hohlkörper 1 verbunden sein, wie dies anhand der Fig. 7 bis 9 erläutert wurde. Fig. 4 zeigt ein Wärmeleitblech 21 mit einem ebenen Schenkel 21a und einem profilierten Schenkel 21b. Der Schenkel 21a kann so wie bereits beschrieben, befestigt sein. Die Profilierung des Schenkels 21b ergibt eine Vergrösserung der Oberfläche im Vergleich mit einem ebenen Schenkel. Aufgrund des guten Wärmetransportes in Aluminium ist eine solche Oberflächenvergrösserung vorteilhaft.

Fig. 5 zeigt ein Wärmeleitblech 22 mit einem hutförmigen Querschnitt. Dieses Profil unterscheidet sich von dem Profil nach Fig. 3 dadurch, dass an den Enden von Schenkeln 22a und 22b Randabkantungen 22c und 22d angebracht sind, wodurch ebenfalls die Oberfläche vergrössert wird. Fig. 6 zeigt ein Wärmeleitblech 23 mit einem Befestigungsschenkel 23a, einem rechtwinklig dazu verlaufenden Schenkel 23b und einem am Ende des Schenkels 23b angeordneten kastenförmigen Teil 23c. Auch dieses Wärmeleitblech kann gleich befestigt sein, wie die anderen Wärmeleitbleche. Durch den kastenförmigen Teil 23c wird wieder eine Oberflächenvergrösserung erreicht.

In den Fig. 10 bis 14 ist ein Wärmetauscher dargestellt, der anstelle einzelner Wärmeleitbleche ein grosses, mäanderförmig gebogenes Wärmeleitblech 14 aufweist, das an einem Hohlkörper 15 befestigt ist. Die Befestigung ist in gleicher Art und Weise vorgenommen, wie dies bereits anhand der Fig. 7 für das Wärmeleitblech 2 erläutert wurde.

Das Wärmeleitblech 14 liegt mit Wärmeübertragungsbereichen 16 an der Hohlplatte 15 an. Zwischen zwei solchen Anlagebereichen befinden sich Schleifen 17, von denen Wärme an die Umgebungsluft abgegeben (im Falle eines Heizkörpers) oder von denen aus der Umgebungsluft Wärme aufgenommen wird (im Falle eines Wärmeabsorbers). Auf jedem Wärmeübertragungsbereich 16 liegt ein Streifen 18 aus Stahlblech, der bei der Herstellung der Verbindung durch in den Wärmeübertragungsbereichen 16 vorgesehene Löcher hindurchgedrückt wird.

In Fig. 11 ist der Zustand vor dem Verschweissen dargestellt. In diesem Zustand sind die Stahlblechstreifen 18 noch eben. In Fig. 12 ist der Zustand nach der Verschweissung dargestellt; insofern stimmt Fig. 12 mit Fig. 7 überein. In Fig. 13 ist wiederum der Zustand vor der Verschweissung gezeigt. Um die exakte Ausrichtung der Blechstreifen 18 auf das Wärmeleitblech zu erleichtern, ist am Wärmeleitblech an jedem Wärmeübertragungsbereich 16 eine Auskrampung 24 vorgesehen, die formschlüssig in eine entsprechende Auskrampung 25 des Blechstreifens 18 eingreift. Fig. 14 zeigt den Zustand nach dem Verschweissen. Beim Verschweissen können auch die Auskrampungen 24, 25 flachgedrückt werden. Hierauf kann jedoch auch verzichtet werden.

Der Hohlkörper 15 ist aus zwei Schalen 26 und 27 zusammengesetzt. An dieser Stelle sei festgehalten, dass der Teil, an dem das Wärmeleitblech befestigt ist, nicht unbedingt ein Hohlkörper sein muss. Beispielsweise könnte die Stahlblechwand an der das Wärmeleitblech befestigt ist, auch elektrisch beheizt werden, wofür ein Hohlkörper, der ein fliessfähiges Wärmeträgermedium führen kann, nicht erforderlich ist.

Die Höhe der Schleifen ist (siehe Fig. 11) mit b bezeichnet und die Dicke des Wärmeleitbleches mit a. Bei einer gegebenen Blechdicke a kann die Höhe b wesentlich grösser sein, als dies sinnvoll wäre, wenn das Wärmeleitblech aus Stahl bestehen würde. Wegen der wesentlich besseren Wärmeleitfähigkeit von Aluminium nämlich wird auch bei verhältnismässig grosser Höhe b noch so viel Wärme in die äusseren Bereiche der Schleifen geleitet, dass dort noch eine nennenswerte Temperaturdifferenz gegenüber der Umgebungsluft vorhanden ist.

Fig. 15 zeigt eine Konstruktion, die im Prinzip mit der Konstruktion nach den Fig. 10 bis 14 übereinstimmt. Dargestellt ist in Fig. 15, dass an einer Stahlwand 28 Wärmeleitbleche 29 oder 30 oder 31 von verschiedener Höhe $h_1$, $h_2$ oder $h_3$ befestigt werden können. Gewählt ist hier wieder eine Befestigung mit aufgelegtem Blechstreifen 32. Die Teilung der verschieden hohen Wärmeleitbleche ist gleich, so dass für alle diese Leitbleche die gleiche Stahlwand 28 verwendet werden kann. Die Auswahl des geeigneten Wärmeleitbleches erfolgt nach den vorkommenden Temperaturdifferenzen und der erwünschten Leistung des Wärmetauschers.

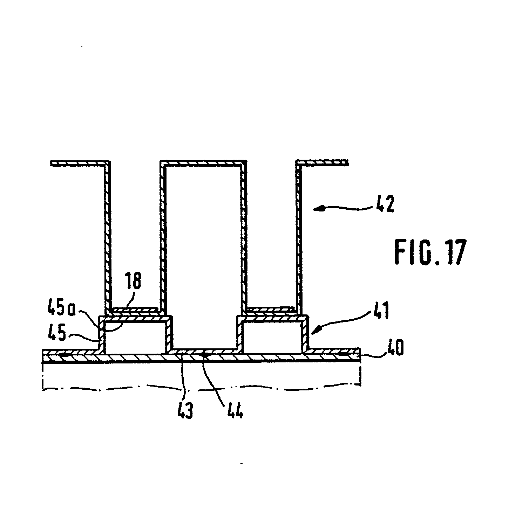

In Fig. 16 ist demonstriert, dass auch grosse zusammenhängende Leitbleche so profiliert werden können, dass ihre Oberfläche vergrössert wird. Dargestellt sind zwei Hohlkörper 33 und 34, an deren einander zugewendeten Seiten Wärmeleitbleche 35 befestigt sind. Die Wärmeleitbleche 35 haben an den Hohlkörpern 33, 34 anliegende Wärmeübertragungsbereiche 36. Auch diese sind mittels aufgelegter Stahlblechstreifen an dem zugeordneten Hohlkörper befestigt. Zwischen zwei Wärmeübertragungsbereichen befinden sich vom Hohlkörper abragende Schleifen 38. Diese Schleifen sind durch eine Einbuchtung 39 wieder in sich mäanderförmig profiliert, wodurch ihre Oberfläche wesentlich vergrössert wird und dadurch auch die Kontaktfläche für Umgebungsluft. Auch auf diese Weise lässt sich die gute Wärmeleitfähigkeit von Aluminium voll ausnutzen. Diese Konstruktion ist auch zweckmässig, wenn die Bautiefe des Wärmeleitbleches vorgegeben ist und eine grosse Oberfläche des Wärmeleitbleches gewünscht wird.

Fig. 17 zeigt eine Ausführungsform, bei der an einer Stahlwand 40 ein Halteblech 41 aus Stahl befestigt ist, mit dem dann das eigentliche Wärmeleitblech 42 aus Aluminium verbunden ist.

Das Halteblech 41 ist mäanderförmig gekrümmt und an Befestigungsbereichen 43 mittels Punktschweissungen 44 mit der Stahlwand 40 verbunden. Zwischen zwei Befestigungsbereichen 43 erstrecken sich Schleifen 45, die eine ebene Wand 45a aufweisen, an der das Wärmeleitblech anliegt. Dieses ist entsprechend den Fig. 10 bis 14 ausgebildet und auch auf gleiche Weise mittels Stahlblechstreifen 18 befestigt. Bei dieser Ausführungsform hat auch das Halteblech 41 eine Wärmeleitfunktion, da es Wärme aus der Stahlwand 40 zum Wärmeleitblech 41 hin übertragen muss. Auch wird das Halteblech 41 von Umgebungsluft bespült, so dass aus diesem auch direkt Wärme aufgenommen wird.

**Patentansprüche**

1. Wärmetauscher, insbesondere Heizkörper oder Wärmeabsorber, mit einem plattenförmigen Hohlkörper (1; 15; 28; 40) aus Stahlblech, der Hohlräume für die Führung eines strömungsfähigen, vorzugsweise flüssigen Wärmeträgermediums aufweist, und mit mindestens einem wärmeleitend mit der Stahlwand verbundenen und von dieser abragenden Wärmeleitblech (2; 20; 21; 22; 23; 14; 29; 30; 31; 35; 42), das aus einem Metall besteht, dessen Wärmeleitfähigkeit grösser ist als die Wärmeleitfähigkeit von Stahl, wobei das Wärmeleitblech (2; 20; 21; 22; 23; 14; 29; 30; 31; 35; 42) mit dem Hohlkörper (1, 15; 28; 40) mittels eines mit dem Hohlkörper (1, 15; 28; 40) verschweissten Materials (4; 18; 32; 37; 18) gegen den Hohlkörper (1; 15; 28; 40) angepresst ist, dadurch gekennzeichnet, dass das mit dem Hohlkörper (1, 15; 28; 40) verschweisste Material aus einem Stahlblechstreifen (4; 18; 32, 37) besteht, der auf dem Wärmeleitblech (2; 20; 21; 22; 23; 14; 29; 30, 31; 35; 42) aufliegt und dieses an mehreren Stellen durchgreift und mit dem Hohlkörper (1; 15; 28; 40) durch Punktschweissungen (6; 11) verschweisst ist.

2. Wärmetauscher, insbesondere Heizkörper oder Wärmeabsorber, mit einem plattenförmigen Hohlkörper (1) aus Stahlblech, der Hohlräume für die Führung eines strömungsfähigen, vorzugsweise flüssigen Wärmeträgermediums aufweist und mit mindestens einem wärmeleitend mit der Stahlwand verbundenen und von dieser abragenden Wärmeleitblech (2''a), das aus einem Metall besteht, dessen Wärmeleitfähigkeit grösser ist als die Wärmeleitfähigkeit von Stahl, wobei das Wärmeleitblech (2''a) mit dem Hohlkörper (1) mittels eines mit dem Hohlkörper (1) verschweissten Materials (12) gegen den Hohlkörper (1) angepresst ist, dadurch gekennzeichnet, dass das mit dem Hohlkörper (1) verschweisste Material aus Stahlpartikeln (12), wie Stanzbutzen oder Spänen, besteht, wobei mehrere Stahlpartikel bei der Punktschweissung durch das Wärmeleitblech (2''a) gedrückt und mit dem Stahl-Hohlkörper (1) verschweisst und gleichzeitig im Wärmeleitblech (2''a) eingebettet sind, wobei die Schmelztemperatur des Wärmeleitbleches geringer ist als die Schmelztemperatur der Stahlpartikel (12).

3. Wärmetauscher nach Anspruch 1, dadurch gekennzeichnet, dass das Wärmeleitblech (2a; 14) gelocht ist und der Stahlblechstreifen (4; 18) das Wärmeleitblech (2a; 14) an den Lochungen (3; 19) durchgreift.

4. Wärmetauscher nach Anspruch 1, dadurch gekennzeichnet, dass das Wärmeleitblech (2'a) durchgeschmolzen ist und der Stahlblechstreifen (4) das Wärmeleitblech (2'a) an den Durchschmelzungsstellen (9) durchgreift, wobei die Schmelztemperatur des Wärmeleitbleches (2'a) niedriger ist als die Schmelztemperatur des Stahlblechstreifens (4).

5. Wärmetauscher nach einem der vorhergehenden Ansprüche, dadurch gekennzeichnet, dass das Wärmeleitblech (2; 20; 21; 22; 23; 14; 29; 30; 31; 35; 42) aus Aluminium oder einer Aluminiumlegierung besteht und vorzugsweise eine Dikke von 0,1 mm bis 0,9 mm, vorzugsweise von 0,3 mm bis 0,5 mm hat.

6. Wärmetauscher nach einem der Ansprüche 1 und 3 bis 5, dadurch gekennzeichnet, dass am Wärmeleitblech (14) eine Erhöhung (24) vorgesehen ist, die zur Ausrichtung des Stahlblechstreifens (18) auf das Wärmeleitblech (14) in eine Vertiefung (25) am Stahlblechstreifen (18) eingreift.

7. Wärmetauscher nach einem der Ansprüche 1 und 3 bis 5, dadurch gekennzeichnet, dass der Stahlblechstreifen (4; 18; 32; 37) etwa die gleiche Dicke hat wie das Wärmeleitblech (2; 14; 29; 30; 31; 35; 42).

8. Wärmetauscher nach einem der Ansprüche 1 und 3 bis 7, dadurch gekennzeichnet, dass das Wärmeleitblech (14; 29; 30; 31; 35; 42) in an sich bekannter Weise mehrere Schleifen (17; 38) aufweist und längs Scheitelbereichen (16; 36) von Schleifen (17; 38) an der Stahlwand (27; 28; 33, 34) oder einem damit verbundenen Halteblech (41) anliegt, wobei der Blechstreifen (4; 18; 32; 37; 18) etwa die Breite der genannten Scheitelbereiche (16; 36) aufweist.

**Claims**

1. A heat exchanger, in particular a radiator or a heat absorber, with a plate-shaped hollow member (1; 15; 28; 40) of steel sheet which comprises cavities to convey a heat transfer medium which is capable of flowing and preferably liquid, and with at least one heat baffle plate (2; 20; 21; 22; 23; 14; 29; 30; 31; 35; 42) which is connected to the steel wall in a heat-conducting manner and projects from the latter and which consists of a metal, the thermal conductivity of which is greater than the thermal conductivity of steel, the heat baffle plate (2; 20; 21; 22; 23; 14; 29; 30; 31; 35; 42)* (1; 15; 28; 40) being urged against the hollow member (1; 15; 28; 40) by means of a material (4; 18; 32; 37; 18) welded to the hollow member (1; 15; 28; 40), characterized in that the material welded to the hollow member (1; 15; 28; 40) consists of a strip of steel strip (4; 18; 32; 37) which rests on the heat baffle plate (2; 20; 21; 22; 23; 14; 29; 30; 31; 35; 42) and engages the latter at a plurality of points and is welded to the hollow member (1; 15; 28; 40) by spot welding (6; 11).

2. A heat exchanger, in particular a radiator or a heat absorber, with a plate-shaped hollow member (1) of steel sheet which comprises cavities to convey a transfer medium which is capable of flowing and preferably liquid, and with at least one heat baffle plate (2''a) which is connected to the steel wall in a heat-conducting manner and projects from the latter and which consists of a metal, the thermal conductivity of which is greater than the thermal conductivity of steel, the heat baffle plate (2''a)* being urged against the hollow member (1) by means of a material (12) welded to the hollow member (1), characterized in that the material welded to the hollow member (1) consists of steel particles (12), such as cuttings or chips, a plurality of steel particles being pressed through the heat baffle plate (2''a) during the spot welding and welded to the steel hollow member (1) and being embedded at the same time in the heat baffle plate (2''a), the melting temperature of the heat baffle plate being lower than the melting temperature of the steel particles (12).

3. A heat exchanger according to Claim 1, characterized in that the heat baffle plate (2a; 41) is perforated and the strip (4; 18) of steel sheet engages in the heat baffle plate (2a; 41) at the holes (3; 19).

4. A heat exchanger according to Claim 1, characterized in that the heat baffle plate (2'a) is melted through and the strip of steel sheet (4) engages through the heat baffle plate (2'a) at the points of through-melting (9), the melting temperature of the heat baffle plate (2'a) being lower than the melting temperature of the strip of steel sheet (4).

5. A heat exchanger according to any one of the preceding Claims, characterized in that the heat baffle plate (2; 20; 21; 22; 23; 14; 29; 30; 31; 35; 42) consists of aluminium or an aluminium alloy and preferably has a thickness of from 0.1 mm to 0.8 mm, preferably from 0.3 mm to 0.5 mm.

6. A heat exchanger according to any one of Claims 1 and 3 to 5, characterized in that the heat baffle plate (14) has a raised portion (24) which engages in a depression (25) on the strip of steel sheet (18) in order to orientate the strip of steel sheet (18) towards the heat baffle plate (14).

7. A heat exchanger according to any one of Claims 1 and 3 to 5, characterized in that the strip of steel sheet (4; 18; 32; 37; 18) has approximately the same thickness as the heat baffle plate (4; 14; 29; 30; 31; 33; 34; 42).

8. A heat exchanger according to any one of Claims 1 and 3 to 7, characterized in that the heat baffle plate (14; 29; 30; 31; 35; 42) comprises a plurality of loops (17; 38) in a manner known per se and bears along apex regions (16; 36) of loops (17; 38) against the steel wall (27; 28; 33; 34) or a holding plate (41) joined thereto, the plate strip (4; 18; 32; 37; 18) having approximately the [same] width of the said apex regions (16; 36).

* N.B. See footnote on page 1.

**Revendications**

1. Echangeur de chaleur, en particulier corps chauffant ou absorbeur de chaleur, comportant un corps creux en forme de plaque (1; 15; 28; 40) en tôle d'acier qui présente des cavités pour le passage d'un fluide caloporteur de préférence liquide, et au moins une plaque conductrice de la chaleur (2; 20; 21; 22; 23; 14; 29; 30; 31; 35; 42) liée à la paroi en acier par une liaison conduisant la chaleur et saillant de cette paroi constituée d'un métal dont la conductivité thermique est supérieure à celle de l'acier, cette plaque conductrice de la chaleur (2; 20; 21; 22; 23; 14; 29; 30; 31; 35; 42) étant serrée contre le corps creux (1; 15; 28; 40) au moyen d'une matière (4; 18; 32; 37; 18) soudée à celui-ci, caractérisé en ce que la matière soudée au corps creux (1; 15; 28; 40) est une bande de tôle d'acier (4; 18; 32; 37) qui s'appuie sur la plaque conductrice de la chaleur (2; 20; 21; 22; 23; 14; 29; 30; 31; 35; 42), traverse celle-ci à plusieurs endroits et est soudée par points (6; 11) au corps creux (1; 15; 28; 40).

2. Echangeur de chaleur, en particulier corps chauffant ou absorbeur de chaleur, comportant un corps creux en forme de plaque (1) en tôle d'acier qui présente des cavités pour le passage d'un fluide caloporteur de préférence liquide, et au moins une plaque conductrice de la chaleur (2''a) liée à la paroi en acier par une liaison conduisant la chaleur et saillant de cette paroi constituée d'un métal dont la conductivité thermique est supérieure à celle de l'acier, cette plaque conductrice de la chaleur (2''a) étant serrée contre le corps creux (1) au moyen d'une matière (12) soudée à celui-ci, caractérisé en ce que la matière soudée au corps creux (1) est constituée de particules d'acier (12) telles que chutes de découpage ou copeaux, plusieurs particules d'acier étant, lors du soudage par points, pressées par la plaque conductrice de la chaleur (2''a) et soudées au corps creux en acier (1) et en même temps noyées dans la plaque conductrice de la chaleur (2''a), la température de fusion de la plaque conductrice de la chaleur étant inférieure à celle des particules d'acier (12).

3. Echangeur de chaleur selon la revendication 1, caractérisé en ce que la plaque conductrice de la chaleur (2a; 14) est perforée et la bande de tôle d'acier (4; 18) la traverse aux perforations (3; 19).

4. Echangeur de chaleur selon la revendication 1, caractérisé en ce que la plaque conductrice de la chaleur (2'a) est fondue et la bande de tôle d'acier (4) la traverse aux endroits fondus (9), la température de fusion de la plaque conductrice de la chaleur (2'a) étant inférieure à celle de la bande de tôle d'acier (4).

5. Echangeur de chaleur selon l'une des revendications précédentes, caractérisé en ce que la plaque conductrice de la chaleur (2; 20; 21; 22; 23; 14; 29; 30; 31; 35; 42) est en aluminium ou en alliage d'aluminium et a de préférence une épaisseur de 0,1 à 0,8 mm, de préférence de 0,3 à 0,5 mm.

6. Echangeur de chaleur selon l'une des revendications 1 et 3 à 5, caractérisé en ce que la plaque conductrice de la chaleur (14) présente une élévation (24) qui s'engage dans un creux (25) de la bande de tôle d'acier (18) pour la mise en place correcte de la bande en tôle d'acier (18) sur la plaque conductrice de la chaleur (14).

7. Echangeur de chaleur selon l'une des revendications 1 et 3 à 5, caractérisé en ce que la bande de tôle d'acier (4; 18; 32; 37; 18) a à peu près la même épaisseur que la plaque conductrice de la chaleur (2; 14; 29; 30; 31; 35; 42).

8. Echangeur de chaleur selon l'une des revendications 1 et 3 à 7, caractérisé en ce que la plaque conductrice de la chaleur (14; 29; 30; 31; 35; 42) présente de manière connue plusieurs ondulations (17; 38) et s'appuie, le long de zones sommitales (16; 36) d'ondulations (17; 38), sur la paroi en acier (27; 28; 33; 34) ou sur une plaque support (41) liée à celle-ci, la bande de tôle (4; 18; 32; 37; 18) ayant à peu près la largeur desdites zones sommitales (16; 36).

FIG.1

FIG.2  FIG.3  FIG.4  FIG.5  FIG.6

FIG.7  FIG.8  FIG.9

FIG. 10

FIG. 13

FIG.14

FIG. 11

FIG.12

11

FIG. 15

FIG. 16

FIG.17